(19) **Europäisches Patentamt**

**European Patent Office**

**Office européen des brevets**

(11) **EP 0 953 149 B1**

(12) **EUROPEAN PATENT SPECIFICATION**

(45) Date of publication and mention of the grant of the patent:
**15.09.2004 Bulletin 2004/38**

(51) Int Cl.⁷: **G01N 21/86**

(21) Application number: **98900897.4**

(86) International application number:
**PCT/GB1998/000120**

(22) Date of filing: **15.01.1998**

(87) International publication number:
**WO 1998/032004 (23.07.1998 Gazette 1998/29)**

(54) **DIAGNOSTIC SYSTEM**

DIAGNOSESYSTEM

SYSTEME DIAGNOSTIQUE

(84) Designated Contracting States:
**AT BE CH DE DK ES FI FR GB GR IE IT LI LU MC NL PT SE**
Designated Extension States:
**AL LT LV MK RO SI**

(30) Priority: **15.01.1997 GB 9700729**
**18.07.1997 GB 9715264**
**04.11.1997 GB 9723321**

(43) Date of publication of application:
**03.11.1999 Bulletin 1999/44**

(73) Proprietor: **AXIS-SHIELD ASA**
**0581 Oslo 5 (NO)**

(72) Inventors:
• **SUNDREHAGEN, Erling**
**N-0510 Oslo (NO)**
• **BREMNES, Dag**
**N-1165 Oslo (NO)**

(74) Representative: **Cockbain, Julian, Dr. et al**
**Frank B. Dehn & Co.,**
**European Patent Attorneys,**
**179 Queen Victoria Street**
**London EC4V 4EL (GB)**

(56) References cited:
**EP-A- 0 646 784** **WO-A-89/07255**
**WO-A-94/19767**

**Description**

The invention relates to a method of analysis of image data from a chemical diagnostic assay and to a diagnostic apparatus usable in a laboratory or, especially, at the point-of-care, eg. in a physician's office.

Many diagnostic assays are available nowadays to physicians, and an increasing number do not require him to send the patient's sample (eg. blood, urine, saliva, stool) to a diagnostic laboratory for analysis. Such in-office assays enable a result to be obtained rapidly and entered on to the patient's computer record by the physician or his assistant.

The in-office diagnostic assay kits frequently generate as their output an image (eg. a colour dot or a line or series of lines or another pattern) on a flat substrate (eg. paper or film) which, to produce a quantified result, require analysis by a specialized, dedicated reader, eg. a spectrophotometer tuned to a specific wavelength or an optical densitometer. As a result, with the proliferation of in-office assays the physician's office space is increasingly encroached upon by an array of such specialized readers, each producing results which must be input manually into the patient's computer record, an increasing burden on the physician which clearly raises the risk of mistakes occurring during data entry.

We have now found that these problems may be reduced or avoided in a simple and straightforward fashion by the use of a digital image acquisition device (e.g a desk-top, flat-bed optical computer scanner) capable of generating a digitised record of the image produced by a diagnostic assay and of software capable of performing colour analysis of the image by manipulation (analysis) of the digitised record.

EP 646784 discloses a video test strip reader and method for evaluating test strips. WO 94/19767 discloses an optical specimen analysis system and method. WO 89/07255 discloses an apparatus and method for detecting hemagglutination reactions.

The present invention provides a method according to claim 1 and apparatus according to claim 12.

Conveniently the apparatus and systems of the invention comprise a flat bed colour scanner (sometimes referred to as computer scanners) and a personal computer.

The diagnostic apparatus (system) of the invention may and preferably will be arranged to analyse image results from a plurality (ie. two or more) of different assays.

By colour analysis, it is meant that the colour assigned to image pixels in the digitised record and not just the intensity assigned to such pixels is utilized in the analysis and that such utilization involves determination of a colour combination corresponding to the assigned colour or of the distribution or pattern of a plurality of colours.

The computer which performs the colour analysis is referred to above as a personal computer. By this is meant a desk-top or lap-top (or palm top etc.) or other relatively inexpensive machine, eg. of the type produced by Apple, Dell, Compaq, Olivetti, IBM and many others. Alternatively however a more powerful or extensive computer system may be used, especially where the system is located within a hospital or commercial organization (in which case the scanner may be linked directly or indirectly, eg. telephonically, to a component of a computer network). Indeed even with "personal" computers the connection to the scanner may be indirect, eg. telephonic. The results generated by the system and method of the invention are preferably entered directly onto the relevant patient's computer file, either on the PC, or on a central computer to which the PC is linked by a network, or on a remote computer via a permanent or impermanent linkage (eg. via the internet, etc.). In general, the system and method of the invention are intended primarily for use in the clinician's office/laboratory or in a hospital diagnostics laboratory and so direct entry into the patient's file on the PC itself or on a network-linked computer is of particular interest.

The desk top scanner and the PC used in this system may be standard products available on the personal computer and computer accessories market. This may operate in reflectance or transmission mode and in the latter instance may be a transparency (ie. slide or dia) scanner or a transparency scanner add-on to a larger bed scanner. One example of a scanner that may be used is the Relisys Infinity. This can be used to assign pixels to a grey scale or alternatively to assign a colour value (e.g. green, blue and red combinations) to each pixel.

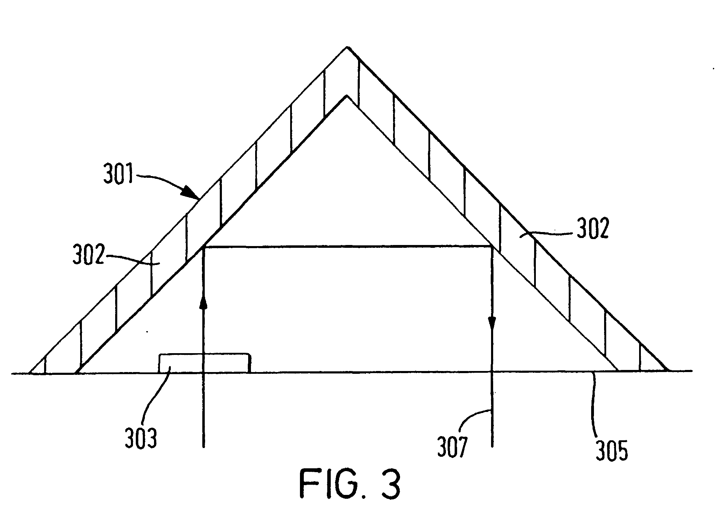

It has been found that transmission colour data from a transparent substrate, such as the HemoCue B-Glucose microcuvette from HemoCue AB, gives improved results over reflectance data from an opaque strip. In order to use transparent strips with a standard, flat-bed scanner, an adapter is required, for example, as shown in Figure 3. A suitable adapter 301 comprises two perpendicular, flat mirrored surfaces 302 which are placed over the strip 303 on the scanner glass 305 such that they each make an angle of 45° with the scanner glass. Light 307 from the scanner passes vertically out through the glass (and thus through the substrate) and is reflected into a horizontal path by one mirror. The horizontal light is then reflected back towards the scanner glass by the second mirror. Thus, the scanner can detect an image of the light transmitted by the substrate in a position adjacent the substrate.

The substrate on which the image result is generated by the diagnostic assay and which is read by the scanner may be any suitable transparent, opaque or partly opaque material, eg. transparent film or a membrane or matrix, including fibrous cellulosic webs such as paper. The substrate will be selected to achieve the image result generation required by the diagnostic assay and thus may for example be a photographic film or a porous (eg. microporous) membrane. Appropriate substrates, eg. nylon, PVDF, glass fibre, polypropylene fibre, polyester fibre, cellulose fibre, and nitrocellulose substrates are available from Pall Biosupport (eg. Biodyne, Immunodyne, LoProdyne, FluoroTrans, Leukosorb, Hemadyne, Hemasep, Accuwik, LoProsorb, Tissuquartz, etc.), Whatman Int. Ltd. (eg. Nitrocellulose, Cyclopore, Anopore and BCF180 membranes), Gelman Sciences (eg. Biotrace, and Ultrabind membranes), and Millipore (eg. Immobilon, Hi-Flow, Stratapore and Ultrafree membranes).

As mentioned above, the PC may be one provided by manufacturers such as IBM, Dell, Compaq, Olivetti etc. Preferably the PC will have a processor equivalent to or superior to the Intel Pentium series (eg. P100, P130 or P200).

The diagnostic assay kits may for example be any of the currently available assay kits which generate results as images on substrates which are intended to be read in the visible spectrum by specialized, dedicated optical reader systems.

The software required is straightforward being required only to transform the digitised record for one or more different diagnostic assays into a quantified result and to assign that result to a selected file on the PC. Transformation may involve for example identifying the location, colour and/or intensity of the relevant portion of the scanned images.

Routinely the software will be capable of transforming digitised images into quantified results for a range of different assay kits, thus enabling the specialized dedicated readers to be dispensed with (so reducing office clutter) and avoiding the need for manual input of quantified results into the patient's record (so reducing workload and risk of errors).

The invention is not, however, limited to an arrangement comprising a flat-bed scanner and a personal computer.

Thus, according to this method, the optical components required to facilitate the quantification of the image result of the assay are greatly simplified, as the analysis of the image result is carried out by manipulating the digital colour image data rather than by optically selecting a required wavelength of light from the image result as has previously been known. For this reason, the scanning step may be carried out under the illumination of white light, rather than monochromatic light as has previously been the case. Thus, the range of devices available to generate the digital colour image data is significantly broadened. For example, as has been described above, a flat-bed colour scanner may be used. Alternatively, a digital camera may be used to generate the required digital colour image data. Furthermore, a video camera arranged to generate digital colour image data, for example by means of a frame grabber, may be used. Each of these devices is readily available to the medical practitioner.

As mentioned above, the image acquisition device may be a flat-bed scanner, a digital camera, a video camera or any other device capable of generating digital colour image data.

In general, the image acquisition device will be arranged to scan the image result under the illumination of daylight or a white light source. For example, in the case of a flat-bed scanner, white light is generated by the scanner itself. However, in the case of a digital camera or video camera, the white light source may be external to the image acquisition device and may be simply the ambient lighting in the medical practitioner's office. In such cases, where the light source is not controlled by the image acquisition device, it is advantageous for calibration to take place. Thus, the digital colour image data may comprise data corresponding to the colour composition of a calibration object of a predetermined colour or colour(s). The calibration object may be presented to the image acquisition device together with the image result or may be presented to the image acquisition device in a calibration step. In either case, it is possible for the data processing means to compare the digital colour image data relating to the calibration object with stored data relating to the predetermined colour(s) of the calibration object and thereby determine a relationship between the colours and the digital colour image data. This relationship, which may be in the form of a look-up table or an algorithm, may then be used to translate the digital colour image data relating to the image result into normalised digital colour image data that is independent of the characteristics of the light source and the imaging device.

The calibration object, or an additional calibration object, may also be used to calibrate the magnification of the image acquisition device. For example, the calibration object may be provided with a region of predetermined spatial dimensions from which the data processing means may calculate a relationship between the dimensions represented by the digital colour image data and the actual dimensions of the objects represented thereby. Alternatively, the image acquisition device may be maintained in a fixed spatial relationship with the plane in which the image result is or will be located. This is generally the case with a flat-bed scanner, but a suitable jig or the like may be provided for a digital camera or video camera.

One example of a diagnostic assay kit suitable for use in the invention is the glycosylated haemoglobin assay developed by Axis Biochemicals AS and shortly to be marketed by Boehringer Mannheim.

In this, a blood sample is contacted with a chromophore labelled boronic acid. The blue boronic acid compound binds to glycosylated haemoglobins and if the haemoglobin is coagulated and the sample placed on filter paper the unbound blue boronic acid is drawn away from the central red/blue coagulated haemoglobin spot. The proportion of glycosylated haemoglobin is currently determined by reflectometry - measuring the red/blue nature of the central haemoglobin spot. Colour scanners or similar image acquisition devices, which currently are capable of colour recognition between millions of colours, may be used according to the present invention to generate a digitised image of the absorbent substrate and from the colour assignment of the central haemoglobin spot a quantified result for the glycosylated haemoglobin titre may be determined by the PC or similar data processing system.

In principle, there are four ways of using colour in quantitative chemical analysis of images on planar substrates:

1. Analysis of intensities of one colour on a specific location on the substrate.

2. Analysis of a pattern or distribution of one colour on the substrate.

3. Analysis of the intensities of different colours/ mixtures of colours on a specific location on the substrate.

4. Analysis of a pattern of colours/distribution of colours on the substrate.

In all the four methods above, specific and non-specific colouring methods can be used.

Specific, semi-specific and non-specific colouring techniques are well known and illustrative Examples are mentioned in the discussion below.

Protein dyes are used for example for protein dying on electrophoresis gels. Silver staining is an example of a sensitive method for dying of proteins. Coomassie Blue is a common protein dye when not so sensitive methods for protein visualisation are needed.

Periodic acid/Schiff base dyes are semi-specific colours commonly used to dye glycoproteins and mucoproteins, as they bind preferentially to the carbohydrate moieties of the proteins. A dye conjugated to a semi-specific binding residue, like boronic acid, can be used to dye proteins that are glycated. Blue boronic acid conjugates such as described in WO-A-92/08722 are used in commercial glycohemoglobin assays as mentioned above.

Non-specific or semi-specific dyes can be used to obtain specific quantitation by the use of methods that ensure a specific localisation on the substrate. Immobilised specific antibodies are typical means to obtain a specific localisation, so are lectins and other proteins with binding specificity. However, if the analyte is a proteinaceous substance, unspecific dyes can dye both the binding proteins and the analyte. Therefore, another mechanism resulting in a specific localisation may be used. Such a mechanism can be for example a size exclusion horizontal chromatography or alternatively an electric field or a precipitating agent can be used. Thus for example size exclusion chromatography can be used for quantitation of proteins in urine, Rivanol can be used for specific precipitation of albumin, zinc ions for specific precipitation of haemoglobin, etc. In the latter example, zinc precipitation of haemoglobin can be used for specific localisation, while haemoglobin's own red colour can be used for quantitation of haemoglobin, a bound blue boronic acid conjugate (eg. a xylenecyanole:boronic acid conjugate) can be used for glycohemoglobin quantitation, and the blue to red ratio can be used to determine the % glycohemoglobin of total haemoglobin. As the mixture of red and blue will result in another mixed colour, the colour assigned by the PC-scanner or similar image acquisition device can be used as a direct measurement of the % glycohemoglobin.

Specific colouring methods may also be used. These are methods that involve specific binding of a dye or dye precursor to the analyte. The dye or precursor carries a reporter group that can signalise this specific binding. Enzyme linked antibodies have been used in this regard. Such antibodies bind specifically to the analyte, and the non-bound antibodies (with the enzymes linked to the antibodies) are separated. The separation can be induced by any means that results in a different mobility of the binding partners in the device, eg. immobilisation of a capturing antibody reactive to the analyte, a precipitation of the analyte, or a capture or a precipitation of the enzyme-conjugated antibody. Lectins may be used in place of antibodies.

Signals can be generated by chromogen substrates. Alternatively, the enzymes may be replaced by intensively coloured molecules (eg. oxazines, cyanins, triphenylmethines). If such molecules lack the colour intensity necessary for a good signal formation, then colloidal gold or coloured microparticles may be used. Particulate dyes can be coated on or conjugated to colloidal gold or coloured microparticles.

Intrinsic colour (analytes having colours in themselves) or added colours (with or without specific binding), in combination with pattern-forming agents or means (capturing molecules, electric fields, precipitations and size exclusion filtration), may be combined to form multicolour images which can be used for quantitative chemical measurement of one or more analytes in the sample, and if desired calculation of relative concentrations of different analytes.

Indirectly, specific colour can be obtained by immuno-precipitation: an antigen in the substrate may be immobilised by precipitation of a specific precipitating antibody. Non-precipitated antibodies and other non-precipitated proteinaceous material can then be transported away, and a non-specific dye can dye the spot with an intensity corresponding to the precipitated antigen. Thus for example, serum albumin can be precipitated by means of anti-albumin antibodies, washed, and dyed by the use of an unspecific protein dye, eg. Coommasie Brilliant Blue G250 or more preferably Brom Cresol Green. In a parallel spot on the substrate, the free thiol moieties of the precipitated albumin can be dyed by the use of a dithionitrobenzoic acid solution. By scanning, the albumin can be quantitated by means of the brom cresol colour, and the free thiol groups by means of the DTNB colour (the latter because antibodies do not contain free thiol groups). In this way the number of free thiol groups per mol albumin can be measured using a two colour scanning system.

Even simpler, albumin precipitation by Rivanol or capture by means of immobilised albumin binders of different origin can be used. Albumin binders for immobilisation are disclosed in WO-92/08984.

The analyte (or its binding partners) in the sample tested in the diagnostic assay can be contacted with a dye in a number of different ways, for example dropping, soaking, sequential elution through the substrate, or simultaneous elution through the substrate.

The transportation of the dye can take place vertically or horizontally to the surface. Elution through the area of interest is often facilitated by the use of absorption pads, either underneath or at the end of a substrate which is in the form of a porous membrane (eg. a filter) if horizontal migration takes place.

Reactants can either be introduced with elution solutions or may be in dry form in the substrate and becoming solubilised by the elution. This can also be the case for dyes, especially when particulate dyes are to be used.

In principle, a coloured spot can express concentration either by intensity or area.

The intensity is the amount of colour per area unit, eg. in a vertical filtration system for glycohemoglobin. Thus for example quantitation by the use of haemoglobin precipitation and blue boronic acid can be used for intensity measurements of the red and blue colour (or the resulting mixed colour) on a spot the area of which is limited by the frame limiting the filtration area.

The area or length of a spot as an expression of concentration has been used in thin layer chromatography systems with immobilised capturing antibodies along the migration path, which will capture antigen until all antigen is captured, and the use of a specific dye in a second elution along the migration path can be used to identify the area of captured antigen, and a wash solution migrating in the same direction can wash away excess dye to clearly make the area with captured antigen visible. If two sets of capturing antibodies and two different specifically binding dyes are used, two analytes can be quantitated by the use of different colours. Also combinations can be used: eg. albumin can be captured in one area, and TCCP or another phthalocyanin can be used to dye the albumin, the area of albumin can be used to quantify the albumin in the sample, and the binding of blue boronic acid can be used to quantify the glycated albumins. In this case, not only the % glycated albumin is measured, but also the albumin mass concentration and the glycated albumin mass concentration. Since glycated albumin often is measured in mass units, this is an advantage over measuring only % glycated albumin.

A combination of intensity and area may also be used, eg. in an ion exchange chromatography system with tertiary amine residues in a filter for separation of transferrin isoforms (see WO 96/26444). After the separation, the filter is immersed in a suspension of a chicken anti-transferrin antibody (coated onto blue microspheres) which binds to the different bands of transferrin formed. Each band of transferrin is measured, both in width and in intensity, to give a signal volume (area x intensity), and the concentration of the transferrin isoforms (absolute or relative concentrations) can be measured.

A device for measuring the number of transferrin sialic acid residues can be constructed using a filter with immobilised anti-transferrin antibodies, the antibodies being pre-treated with neuraminidase to remove all sialic acid residues from the antibodies. As a first step, transferrin is captured by the immobilised antibodies. As a second step, a second transferrin antibody coated onto blue microspheres is passed through the filter membrane. In a parallel spot, a sialic acid binding lectin coated on colloidal gold is passed through the membrane. After washing, the ratio between the colloidal gold and the blue microspheres can be measured by the PC-scanner or similar image acquisition device.

In addition to the above, the system of the invention may be used in combination with appropriate photodetectors and/or illumination to quantify the properties of analytes exhibiting fluorescence and/or phosphorescence. Colour measurements could also be carried out beyond the visible spectrum, for example in the infra-red or ultra-violet regions.

Information found in colour images can be collected and stored to file in digitised form using flatbed scanners, digital cameras or video cameras. The bit-depth of the stored digitised file (standard bit-values: 1,4,8,15,32) will determine the amount of information that can be retrieved. The number of shades of grey or colour stored in these files are found as exponentials of 2, ie. bit-depth 1 ($2^1$), 2($2^2$), 3($2^3$), 15($2^5$ of each of red, green and blue colour), 24($2^8$ of each of red, green and blue colour). This means that 1, 4 and 8 bit files contains 2, 16 and 256 shades of grey respectively. Similarly a 15 bit file contains information about 32768 different colours ($2^5$=32 different shades of each of the red, green and blue colour), and 24 bit files information about 16777216 different colours ($2^8$=256 different shades of each of the red, green and blue colour). A bit depth of 32, possible to obtain even with rather simple flatbed scanners, makes it possible to store additional information of the colour intensities of each of the collected colours found in a 24 bit file. In more detail, this means that the last 8 bits are utilised for recording intensity, resulting in 256 different intensities ($2^8$=256) for each of the 16777216 different colours stored.

As a consequence of the information stored in the digitised files, quantitative measurement of colour is possible. Using a 10 bit file, 1024 different shades of grey are available. A digitised image of a single spot of ink on white paper is measured as a high intensity black centre with edges along the rim composed of low intensity shades of light grey/ white. This information can be presented and visualised as a three-dimensional bell shaped surface with the third dimension expressed as intensity of black. Integrating across the surface gives the volume of the body covered by this surface. This volume can then be used as a direct quantitative measure when comparing different spots with different intensities. Similarly, using 15, 24 or 32 bit files it is also possible to derive quantitative information regarding the colour composition of the original image. Colour measurements and quantification measuring spots of either pure red, green or blue colour is easy and equivalent to the measurement performed using grey scale data. One way of doing this is to transfer the recorded colour data by matrix calculations to hue-saturation values (HS-values). However, quantification of mixtures of colours are more complicated.

The optical part of flatbed scanners contains three different detectors each with spectral sensitivity to the three primary colours of light, i.e. red, green and blue, respectively. $x(\lambda)$ has a high sensitivity in the red wavelength area, $y(\lambda)$ in the green wavelength area and $z(\lambda)$ in the blue wavelength area. The colours that we perceive and which are recorded are all the result of different $x(\lambda)$, $y(\lambda)$ and $z(\lambda)$ proportions (stimuli) in the light received from an object. The resulting three values X, Y and Z being recorded are called tristimulus values. In this system every perceived and recorded colour can be expressed with its unique co-ordinate (X,Y,Z) in a co-ordinate system where the axes are formed by the three basic colours red, green and blue. Different numerical expressions have been developed to express colour numerically. In a photometer/ reflectometer used in analytical chemistry to record colours and intensity, monochromators or multiple sensors are used to measure the spectral reflectance of the object at each wavelength or in each narrow wavelength range. Simpler instruments, like flat bed scanners, as previously described measure colour by reflectance measurements only at the wavelengths corresponding to the three primary colours of light (red, green and blue). The three different reflectance values recorded (tristimulus values) can then be used to convert the data to colour spaces like the "Yxy", "L⁺a⁺b" or the "L⁺c⁺h" systems. Digital cameras and video cameras are also capable of producing a digital output for each pixel in a digital colour image composed of the X, Y and Z values (RGB values) for that pixel. Thus, the output from such cameras may be used interchangeably with the output of a flat-bed scanner for the purposes of the invention.

Measurements of mixtures of different colours using flat bed scanners or similar image acquisition devices result in multivariate systems in terms of quantification of each of the colours in the mixture. Colours will be recorded as blends of each of the basic colours red, green and blue. A mixture of two different colours, eg. red and blue, may be recorded as a new colour with its own intensity. In digitised form this colour will be determined by the relative amount of each of the two chromophores used and characterised by its tristimulus values (X,Y,Z), the basis for all quantitative information stored. To quantify the relative relationship between red and blue in a spot composed of two colours, information regarding the specific colour recorded for the mixture is sufficient. Using flatbed scanners in colour mode and a sufficient bit depth of the digitised data, quantitative information can be achieved. However, to be able to perform the quantification of each of the colours in the mixture, standard solutions with known concentration must be used. Standards of two different colours and their mixtures can be spotted on a white surface, measured and used to establish standard curves for the determination of the composition of an unknown colour spot composed of the same two colours.

The complexity of the quantification process measuring colours will vary depending upon the spectral characteristics of the chromophores used. This is because only three different wavelength areas are used in the recording process using.flat bed scanners. The possibility of separating different chromophores then depends upon the spectral separation of the different chromophores involved and their absorption maxima relative to the sensitivity of the $x(\lambda)$, $y(\lambda)$ and $z(\lambda)$ detectors of the scanner. The basis for separating different chromophores is that the reflectance from each of the chromophores used (eg. two or three) is different for at least one of these three wavelength areas. For optimal chromophore systems, ie. where the spectroscopic overlap at $x(\lambda)$, $y(\lambda)$ and $z(\lambda)$ can be neglected, the corresponding X, Y or Z co-ordinate value can be used for their quantification. If chromophores with spectral overlap are used, all three values must be used as part of a multicomponent treatment of the recordings related to concentration. As an example, a blue and red chromophoric system with optimal spectral properties, the relative amount of red and blue chromophore can be calculated by measuring the average X/Z-ratio for every pixel in the recorded spot. By this way every mixture of these two chromophores can be recorded and estimated using a flat bed scanner or similar image acquisition device.

The relationship between the assay result and the colour image data may be stored in the form of a look-up table or an algorithm. In general, this relationship will be specific to a particular assay type and/or substrate. Thus, for maximum flexibility, the data processing system will have access to a plurality of relationships corresponding to the plurality of substrates that may require analysis. These relationships may be stored locally to the data processing system or may be stored remotely, in which case the data processing system may access the relationships by means of a network or other communication channel. In the case of remote storage of the relationships, a database of relationships may be maintained and updated centrally, for example by the manufacturer of the assay substrates. In this way, the latest analysis relationship will always be available to the medical practitioner.

The look-up tables for the relationship between the detected colours and device independent colours or for the relationship between the device independent colour and the assay result will generally be large if all colour combinations are provided for. Thus, preferably a reduced look-up table is provided for a set of predetermined measurements and the result for the particular colour value is interpolated between the known measurement points.

Advantageously, the data processing means of the invention is arranged to automatically identify the substrate of the image result within the digital colour image data and thereby locate the areas of interest in the image data.

The object, which may correspond to the substrate of the image result, may be classified by geometric parameters, such as length, width, radius etc., by comparing identified parameters with corresponding geometric parameters for known objects.

The substrate may be associated with a machine-readable identifier, for example a bar code, or similar machine-readable coding, the identifier including information relating to the assay type and preferably also the associated patient. Preferably, the identifier will be optically readable by the image acquisition device. However, it would also be possible for the identifier to be readable by a separate data acquisition device, for example a bar code scanner, magnetic strip reader, smart card reader or any device capable of converting data stored on the identifier to digital data which can be passed to the data processing system. In a simple form, the identifier may include a single number which corresponds to a record of a type of assay or a particular patient in a database accessible to the data processing system. However, the identifier may contain more information, which may or may not be associated with additional information available to the data processing system.

The assay result can be transferred directly to the P.C. data file for the patient identified by the data processing system using the identifier.

It is important to note that the use of an identifier as described above has application to assay analysis which does not utilise colour analysis as previously described. Thus, for example, the use of an identifier may be applied to the analysis of the colour intensity, size or location of a spot, or a series of lines, for example to produce a graph of chromatographically separated analytes for example as in sialylated transferrin detection for an alcohol abuse assay.

For example, the above described identifier could be used with the following analysis system. The system comprises an optically sealed unit having disposed therein a digital camera or other similar image acquisition device in opposed relationship to an assay substrate. The container further comprises one or more monochromatic light sources or a polychromatic light source and one or more wavelength selectors, such that digital images may be acquired corresponding to the reflection or transmission of a specified wavelength of light by the assay result.

Some embodiments of the invention and some examples will now be described by way of example only and with reference to the accompanying drawings, in which:

Figure 1 is a schematic digital image produced according to the invention;

Figure 2 is a schematic diagram of a PC and scanner arranged according to the invention;

Figure 3 is a schematic view of an adapter used to enable a scanner to operate in a transmission mode.

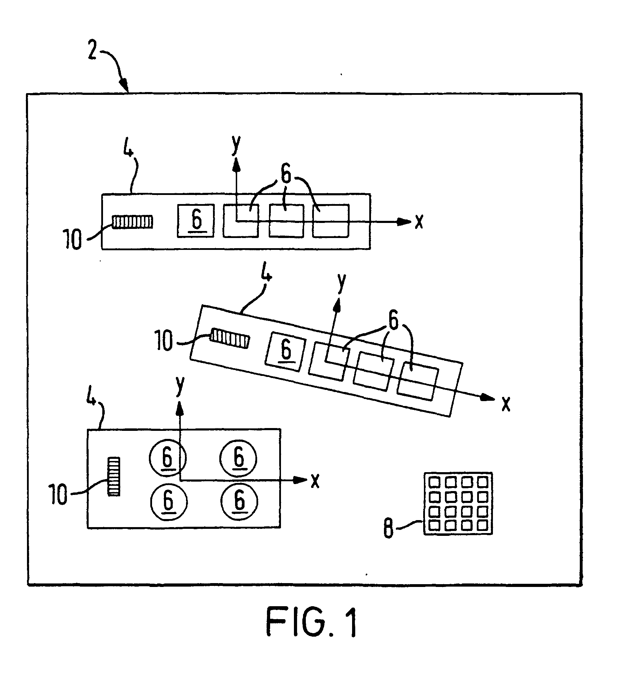

Figure 1 shows schematically an exemplary digital image 2 produced by a scanner in accordance with the invention. The image 2 corresponds to an arrangement of objects 4 each of which contains one or more fields 6. In the following, such an arrangement of objects 4 will be referred to as a "scene", the image 2 corresponding to the scene. Each of the objects may be, for example, a urine assay strip or a similar flat substrate. The fields 6 within each object 4 are defined regions, the colour of which is indicative of the result of an assay.

The scene also comprises a calibration object 8. The calibration object 8 is of a predetermined colour or colours, which colour or colours are known to the data processing system for analysing the image 2. Thus, variations in the ambient lighting conditions or in the sensitivity of the photodetectors of the scanner between the production of subsequent images 2 can be compensated with reference to the calibration object 8. Suitable predetermined colours for the calibration object 8 are a grey scale (all greys from 0% to 100%) each shade of which will contain equal proportions of red, green and blue. The calibration object may be divided into identifiable fields each of a different grey shade or other predetermined colour. In an alternative arrangement, the calibration object may be replaced or supplemented by one or more calibration fields on each object 4.

Each object may also comprise an identification field 10, such as a bar code or other suitable machine-readable coding. The identification field 10 may contain information identifying the type of assay results represented by the fields, the sensitivity of the fields or other information relating to the object 4. The identification field 10 is generally provided at a predetermined location on the object 4 such that it can be easily located in subsequent analysis of the image 2 or used to define the accurate positions of the fields 6. The identification field 10 may be applied to the object 6 as part of the manufacturing process or may be applied once the assay has been carried out. In the former case, the identification field 10 may simply contain a serial number or a code (e.g. a bar code) by which the particular object may be identified during subsequent use. Thus, the data processing system used to analyse the image 2, may contain information associated with this serial number, and thus with the particular object 4. For example, the information may relate to the assay type, date and time of the assay etc. In the case of medical assays, the information may include data identifying the patient, such as name, age, sex, symptoms etc. If the identifying field 10 is applied to the object 4 after manufacture, the field itself may be used to store the information described above, thereby obviating the need for additional dedicated data storage. When the scene contains a plurality of objects 4 the identification field 10 may be used to differentiate between the objects and ensure that the correct results are associated with the correct object. In this way, the quantified assay result may be passed automatically to the correct patient file in a patient database.

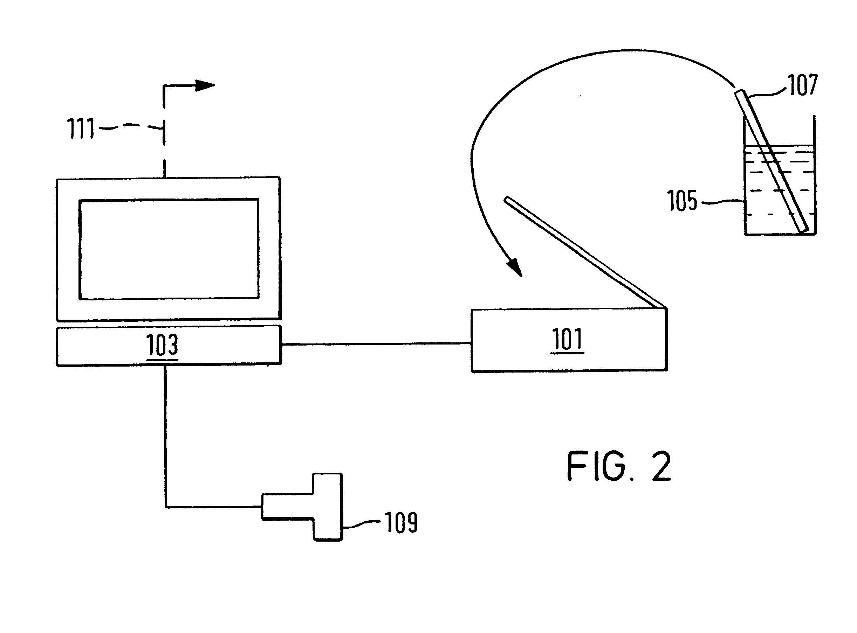

As has previously been described, the data processing system for analysing the image 2 may be a personal computer. An example of a suitable arrangement of a personal computer and scanner is shown in Figure 2. Scanner 101 is connected to PC 103. In order to produce an image for analysis, a test strip 107 is dipped in a container of analyte 105 and then placed on the scanner glass. The PC 103 is also connected to a bar code reader 109 for reading bar codes from patient records, strips and analyte containers etc. The PC 103 has an optional data connection 111 to a remote computer for exporting assay results.

Referring back to Figure 1, the personal computer is provided with object data relating to the various types of objects 4 that it is required to analyse, including the calibration object 8. The object data will, in general, be supplied by the manufacturer of the objects 4 and will include, for each object: the geometrical dimensions of the object (e.g. width and height or for circular or elliptical objects radius or radii) together with the tolerances for those dimensions; the number, location on the object (with tolerances) and identification of the fields 6 provided on the object 4; and the location of the identification field 10. For each type of field 6, some of which may be provided on a number of objects 4, field data will also be provided including: an identification of the property that is indicated by the field 6; and a description of the relationship between the colour of the field 6 and the property indicated by the field. The relationship between the colour of the field 6 and the property indicated by that field may be stored in the form of an algorithm, for example dependent on the mean and standard deviation of the property distribution with the indicating colour. Alternatively, the relationship may be stored as a look-up table which maps the colour of the field 6 on to the value of the property indicated by that field. The values stored in the look-up table may be determined empirically prior to the distribution of the objects for general use.

The image will generally be stored in 24 bit colour, i.e. 8 bits for each component colour, for example red, green and blue. Before analysis of assay objects can be undertaken, the scanner should be calibrated. Such a calibration may be undertaken before every analysis or may be undertaken on installation of the scanner. The first step in the calibration is the production of an image corresponding to an empty scene, i.e. the scanner background which is preferably black. However, the background will not be perfectly black and dust or dirt deposits may result in blemishes on the background. The 24-bit empty image of an empty scene is converted to an 8-bit grey scale image by adding together the 8-bit red, green and blue values for each pixel and dividing the sum by three. The mean grey scale value is calculated for all pixels in the empty image. A grey threshold value is determined which is equal to the calculated mean grey scale value for the empty image plus a small offset, which may be, for example, a multiple or fraction of the standard deviation of the grey scale pixel distribution in the empty image. Thus, the grey threshold is deemed to be the value below which pixels may be considered to correspond to the scanner background.

The positions of pixels with high grey values in the empty image are stored, these pixels being deemed to be due to dirt on the scanner background, and are deleted from all subsequent images, so that the image is not distorted by these "dirty pixels".

The second stage of the calibration is the calibration of colour reproduction of the imaging system and the data processing system using the calibration object 8. The calibration object 8 is identified as an object in the same way as objects to be analysed (as is described hereinafter), but is classified as the calibration object 8. The colours of the fields of the calibration object 8 determined by the data processing system are compared to the predetermined values for these colours, which are stored in the data processing system. On the basis of the differences in the determined colours and the expected colours, a calibration look-up table is calculated which maps the detected value of each colour component to its actual value. In the case of a flat-bed scanner, initially an image 2 may be processed which contains only the calibration object 8, so that the calibration look-up table can be constructed. As the variations in ambient light level will be insignificant for a flat bed scanner, there will be no need for recalibration between subsequent images. However, the calibration object 8 can be included in every scene if variations in the light source or the sensitivity of the photodetectors are expected. In this case the calibration object 8 will be identified initially by the data processing system and the calibration look-up table will be constructed before the other objects 4 in the scene are processed.

In the first stage of processing an 8-bit grey image is created from the 24-bit colour image by summing the three 8-bit colour component (RGB) values for each pixel and dividing by three. Of course, the grey image may be created in any suitable manner, for example as a weighted average of the RGB values, rather than a simple average. This grey image is used in the identification of objects 4 and is not used in the analysis of the fields 6, where the 24 bit colour image is used. The dirty pixels identified in the calibration stage are removed from the image 2 by replacing their grey value with the mean value of their neighbouring pixels. The RGB values of the dirty pixels in the colour image are also respectively replaced by the mean RGB values of their pixels neighbouring the dirty pixel. This may be done before the grey image is created. The background in the grey image is removed by setting to zero the value of each pixel which has a detected grey value below the threshold calculated during the calibration stage.

Subsequently, unwanted gaps in the image are removed by operating on the grey image with a maximum operator and then with a minimum operator. A maximum operator is a matrix of n by n pixels, the function of which is to replace the central pixel of the matrix with the highest pixel value occurring within the n by n matrix. Similarly, a minimum operator replaces the central pixel of the matrix with the lowest value found therein. Each pixel of the grey image is operated on as the central pixel of the maximum/minimum operator. The size n of the operators is determined by the objects that are to be analysed. Objects that contain very dark regions (gaps) extending from one boundary to the other, or at least very close to the boundaries, will be considered as two objects by the data processing system as the gap will be indistinguishable from the background. Thus, by removing such gaps from the grey image it will be ensured that the objects are correctly identified by the data processing system. The gaps are not removed from the colour image, however. Thus the maximum gap size g to be removed from a particular image is the largest gap appearing in any of the objects in the image. The operator size n is equal to the maximum gap size g (in meters) multiplied by the resolution of the image (in pixels per meter). The maximum gap size g for each object is part of the object data stored in the data processing system for each object 4. The maximum gap size for a particular image 2 is the maximum gap size g for all objects which can appear in the scene. Thus, this may be the maximum gap size for the entire list of objects 4 stored in the data processing system or for a selected list of objects that has been defined by the operator as expected to be detected in the scene.

Once the dirty pixels, background and gaps have been removed in the pre-processing stage, the contours of each object 4 in the grey image are traced. Any objects having a boundary less than a predetermined threshold are deleted as being of no interest. This threshold may be determined with reference to the list of all objects stored in the data processing systems or a user-defined list of all objects that are expected to appear in the scene. When the boundary of each object has been determined, the centre of the object is calculated and the principal axes (x, y shown in Figure 1) of the object 4 are determined. If, from the boundary, it is determined that the object is circular, any two perpendicular axes coincident at the centre of the object are chosen. If it is determined that the object is square or rectangular, axes x, y are chosen perpendicular to the sides of the object 4. In this way, a coordinate system is established for each object of interest with the origin of the coordinate system at the centre of the object. The length and width (or radius) of the object have also been determined from the boundary, so that the object can be classified by comparison of these parameters with the stored object data. If the object meets the criteria of more than one set of stored data, further features, such as field positions, of the object are identified and compared to stored data. The object is classified as the stored object type which it most closely matches, within an acceptable error range. If the object does not match the parameters for any of the object data, it is classified as an unknown object. The location of the fields within the classified object are known from the data stored in the data processing system in terms of the local coordinate system that has been determined. A complete set of data has now been created from the 8 bit grey image, which data identifies each object in the grey image (and thus in the colour image) and the exact location of each field (including the identification field 10) in that object. Thus, from the 24-bit colour image the RGB values for each field 6 of each object 4 can be retrieved. These RGB values can be converted to device-independent colour values using the calibration look-up table. The device-independent colour values can then be converted to assay values for each field using the assay relationship look-up table or algorithm. In addition, the information from the identifying field 10 of each object can be read and associated with the assay values calculated for that object. All identifying and assay data is in electronic form and therefore can be passed easily to a, for example patient, database or similar internal or external data system for association with other data relating to the assay, such as demographic or treatment data.

As will be seen from the above, a flat bed scanner can be used simply to obtain accurate assay information from an assay object. The objects are placed face down on the scanner and scanned to create a digital image of the scene which is transferred to a data processing system such as a personal computer for analysis. The image may be stored in a device-independent format so that it may be processed at a remote location or archived for future reference. For cleanliness and ease of handling, the objects may be placed on or in a window, holder or adapter, which may advantageously locate the object on the scanner.

However, the above processing methodology allows for the use of other data acquisition means, as there is no requirement for the accurate positioning or lighting of the objects. Hitherto, complex devices such as spectrophotometers have been used to ensure the accurate location of assay fields and the accurate reproduction of the colour of such fields. However, in accordance with the invention, accessible and relatively inexpensive colour digitisation equipment can be used to obtain the initial colour image data, which is then calibrated by the data processing system to obtain the assay results. Thus, as an alternative to a flat-bed scanner, a digital camera may be used to obtain the colour image data. In this case, the objects to be analysed are placed on a surface above which the camera is positioned. The scene is photographed by the digital camera to produce the digital colour image. The image may then be processed in the same way as for the image obtained by the scanner. However, in order to obtain accurate identification of the size of each object, data relating to the height of the camera above the surface and the camera angle may need to be made available to the data processing system. In addition, a calibration object may be required in each scene as the resultant image may be affected by ambient lighting conditions. The calibration object may also contain spatial calibration information such as one or more regions of predetermined dimensions. Similarly, as an alternative to the scanner or digital camera, a video camera and a frame grabber may be used to produce the digital image data.

An advantage of a digital camera or video camera over a flat-bed scanner is that the substrate may be located in the view of the camera without physical contact therebetween. In the case of a flat-bed scanner, the assay substrate is placed face down on the scanner glass and thus deposits, such as urine, faeces or blood, from the substrate may be transferred to the glass. However, a camera may be positioned at a distance from the substrate, for example above the substrate, and may accurately generate digital colour image data of the substrate without contacting the substrate.

The method of the invention is illustrated further by the following non-limiting Examples:

## Example 1

**Measurement of glycohemoglobin in whole blood using Xylene Cyanole-boronic acid conjugate**

Solution I comprised:

Xylene Cyanole-DAPOL-CPBA (XC-DAPOL-CPBA, $2.3 \times 10^4$ M), 100 mm glycinamide, 25 mM zinc-chloride, 0.07% Triton X-100, 6% formamide, pH 8.1.

2.5 µl of a whole blood sample was mixed with 150 µl of solution I. The whole blood sample was hemolyzed and a precipitate was formed. The precipitated total hemoglobin (red) with bound boronic acid (XC-DAPOL-CPBA) (blue) was separated by filtration on a filter membrane leaving a spot approximately 5 mm in diameter. This spot (image result) was then recorded using a flatbed scanner in "true colour" mode and the data stored to file in digitised form. Since the relative ratio between the two chromophores blue and red found in the spot is directly proportional to the glycation level of the blood sample, this ratio was estimated as follows:

**Detection method 1:**

The recorded mean tristimulus value $(X_m, Y_m, Z_m)$ for every pixel in the image was compared with a colour table containing co-ordinates for all mixtures of red, green and blue corresponding to the bit depth of the recorded image. The ratio between blue and red dye found in the measured spot is given explicitly from the colour table. The percentage of glycohemoglobin to total hemoglobin was determined from a calibration curve composed of known concentrations of glycohemoglobin (x-axis) and tristimulus values $(X_m, Y_m, Z_m)$ based on blue/red (XC-DAPOL-CPBA/Hb)-mixtures (y-axis) previously obtained measuring spots of standard solutions with known glycohemoglobin level.

**Detection method 2:**

From the recorded mean tristimulus value $(X_m, Y_m, Z_m)$ for every pixel in the image the ratio Z/X was calculated. The percentage of glycohemoglobin to total hemoglobin was determined from a calibration curve composed of known concentrations of glycohemoglobin (x-axis) and Z/X-ratio (y-axis) previously obtained measuring spots of standard solutions with known glycohemoglobin level.

**Detection method 3:**

From the digitised data, HS-values were calculated and compared. The percentage of glycohemoglobin to total hemoglobin was determined from a calibration curve composed of known concentrations of glycohemoglobin (x-axis) and HS-values (y-axis) previously obtained measuring spots of standard solutions with known glycohemoglobin level.

## Example 2

**Operation of Scanning and Data Processing System**

Using, for example, a Cinet, 32MB RAM, 166 MHz Pentium processor PC coupled to a Hewlett Packard ScanJet 5p colour scanner, the process of the invention may be performed using the following steps:

(A) The "scene" is configured

(B) The scan of the scene is performed

(C) The scene is segmented into "regions"

(D) The regions are identified

(E) The "quality" of the regions is checked

(F) Data values determined are associated with patient identifier information

(G) The data is exported to a central computer and into the appropriate patient file.

In step (A), if appropriate, the operator will set a scan delay (e.g. 60 or 120 seconds) and select whether the substrate is to be scanned once or more than once, e.g. twice or more.

The scan delay will generally cause appropriate prompt signals, e.g. audible beeps, to occur at pre-set delay times before the scan is performed. This allows the operator to effect the assay (e.g. dip substrate strips in urine, blood or other test substances) and place the substrate on the scanner bed so that the scanning takes place at the desired time after the assay commences. This is important as many assay results must be read at a particular time after assay commencement. Where multiple substrates are to be read by the scanner, these will preferably be spaced apart on the scanner bed such that they are read by the scanner at the same time delay after they have been contacted with their test substance. To assist in this, a mask may be placed on the scanner bed showing the operator where to place the substrate or substrates.

Multiple scans will be selected where it is desirable to follow the progress with time of the assay result, e.g. to report the peak value or to report the change in value over a specific time period. Multiple scans will also be selected where the substrate is arranged for a multiple assay, i.e. to provide values for more than one parameter characteristic of the test substance (e.g. pH, glucose content, albumin content, ketone content, bilirubin content, haemoglobin content, erythrocyte count, specific gravity, nitrite content, etc.) where the individual assays involved require different development times.

Because the assays may require specific development times, it is preferred in the methods of the invention to use reading devices (e.g. scanners) which have uniform start-up times, ie. which will read the substrate with the same time delay after instruction each time. For this reason, the HP ScanJet 5p has been found to be a preferred flat-bed scanner.

In step (A), the operator will generally also select the area to be scanned and select whether bar codes (or other machine readable codes) are allowed and optionally he will also select which such codes are allowed.

Moreover the operator may select whether or not a prompt signal is required and the timing and type of such a signal (e.g. audible or visible).

If bar codes are allowed, the data handling operation will involve identification of the bar code or codes associated with the substrate or substrates. This may for example serve to identify the patient and/or the nature of the substrate and hence the assay or assays involved. A patient bar-code may conveniently be provided on a tear-off portion of the label for the sample-container for the test substance. Such a tear-off portion can be attached to the substrate before scanning or placed adjacent to the substrate on the scanner bed. The substrate itself will preferably carry a code identifying its nature and hence that of the assay.

The PC will conveniently be set up to offer the operator a list of substrates which it can read and from which to select the substrate(s) the operator is using. For the operator's convenience, where multiple substrates are being scanned, the operator will conveniently be able to specify whether all substrates derive from the same patient, whether all substrates are the same (ie. perform the same assays), or whether a mixture of substrates is being scanned. Either before or after scanning, the operator will conveniently be prompted to identify the patient, e.g. by providing a code permitting the results to be exported to the patient's data file.

With this input from the operator the scanning may proceed.

If a prompt signal has been selected, the operator will wait for the prompt, dip the first substrate in the first test substance on receiving the prompt and then place it on the scanner bed in the assigned position after the required contact time, dip the second substrate on receiving the next prompt, etc. until the scanner bed is fully loaded. After the predetermined period(s) from the first prompt the scanner will perform the first and any subsequent scans and export the image data to the PC.

The subsequent image data handling by the PC can be effected in many ways and that described hereafter is simply a preferred scheme.

(1) Find gap size

(2) Make a binary or gray image

(3) Find the "active" image

(4) Remove noise

(5) Run maximum operator in a first (x) direction

(6) Run maximum operator in a second orthogonal (y) direction

(7) Run minimum operator in x-direction

(8) Run minimum operator in y-direction

(It is possible to configure the scene to require the maximum and minimum operators to be run in one direction only. This saves time but restricts the location of objects.)

Gap size for the substrates is specified by the operator's identification of the nature of the substrate in step (A).

The PC takes the image data and segments the scene into regions. For each pixel of the colour image, the colour black is assigned if the mean value of the R, G and B values ((R+G+B)/3) is below a first threshold and the difference between the highest and lowest R, G or B values is not greater than a second threshold value. This produces a treated colour image and from this a grey scale image is created using the mean R, G, B values now assigned to the individual pixels. For example this may be achieved by scanning an empty image, ie. a clean and empty scanner bed, and setting the first threshold as the mean (R+G+B)/3 value for this empty image plus a pre-set value. The second threshold may be set as the product of a pre-set coefficient and the average value of the difference for the R, G and B values from the R, G and B values for the empty image. In other words, a pixel is not discarded if its average (R+G+B)/3 value is below the first threshold but one or two of its R, G and B values are individually noticeably higher than the respective "background" R, G or B value.

From this grey image, the active area, the area containing the substrates and/or bar codes, is selected by moving inwards from the image edges until the number of non-black pixels exceeds a preset limit. The noise may be removed by setting a noise size as half the gap size and removing all structures smaller than the noise size, ie. setting to black all pixels in such structures. This reduces the possibility of a noise pixel being included in an object boundary. Gaps are then removed by operating on the image with a maximum operator followed by a minimum operator. The maximum operator is as wide as the largest gap size for the objects (substrates) allowed in the scene. Of course, if the largest gap size is zero this operation is not required.

The objects in the image are then located by finding a non-black pixel with an adjacent black pixel (ie. a border pixel) and following the path of adjacent such non-black pixels until the original is returned to.

From the resultant list of border pixels, for each region the centre is calculated and the geometry is determined, e.g. as a rectangle or circle. Travelling from the centre of each region to its borders along its principal axes, the length and width of the region is calculated.

Each such region found by this segmentation step is then classified as an object or an unknown. The border data for the unknowns are combined to create regions which are classifiable as objects. For each object the length and width are compared with the length and width data of allowed objects (from the database stored by the PC which contains the characteristic data for the substrates it is set up to read). A quality factor is then determined for the orientation of each object and the orientation is selected as being that with the lowest (ie. best) quality factor. For each object, the quality factors for all objects it is allowed to be is determined and the object is identified as being that with the lowest quality factor.

For each field in the object (located using the data for the allowable objects in the PC's object database mentioned above), the field centre is located. The position of the field is then fine-tuned by calculating for each R, G and B image the standard deviation for its fit to the allowable object when moved small distances $\Delta x$ and $\Delta y$ and selecting the position at which the standard deviation is minimised. The value of the parameter assayed for (e.g. pH, etc.) in each field and the quality, $Q_{Field}$, for each field is determined and the quality factor is determined as the mean value of all the $Q_{Field}$ values.

To determine the parameter value (and the $Q_{Field}$ value), the algorithm appropriate to that parameter must be selected. For some parameters in a multiple assay system this may not involve any colour analysis.

In general, the determination will involve comparison against predetermined colours or patterns corresponding to a range of known values of the parameter observed using the particular substrate, selection of the two or three values with colour or pattern closest to the field being analysed and interpolation to a determined value for the parameter.

By way of example, for a parameter such as glucose content, the data handling preferably involves the following:

1) exclude the outer 25% of the field to prevent quality loss from bad colouration at field edges;

2) construct a histogram of calibrated pixels for the field using R, G, B values;

3) calculate the mean R, G, B value based on the central 50% of the pixels in the histogram;

4) interpolate against calibration standard values as mentioned above.

For a parameter such as erythrocyte count, ie. where non-uniformity of haemoglobin colour is indicative of the presence of non-lysed blood cells, the data handling might involve the following:

1) From the PC database select two reference (calibration) points in colour space: 1 = ($R_1$, $G_1$, $B_1$) for the yellow background colour, and 2 = ($R_2$, $G_2$, $B_2$) a green colour for the blood cells;

2) calculate the mean R, G, B values for all pixels in the field;

3) calculate the deviation, dev = dev R + dev G + dev B;

4) if dev is below a preset threshold, set value to zero, ie. discard as containing no intact cells;

5) calculate the distances $d_1$ and $d_2$ in colour space (R, G, B space) of the mean value from the two selected reference (calibration) points;

6) assign a property value for the parameter being assessed (cell count) as $d_1$ x coefficient/($d_1+d_2$);

7) interpolate as discussed above and described below.

For the interpolation: for each entry in the calibration table for the parameter (in the PC's object database), find the distance Q from the calculated point to the points for the calibration values; select the smallest distance $Q_1$; select a maximum Q range as the range from $Q_1$ to $Q_1$ plus the maximum acceptable error in the database, select at most two other Q values ($Q_2$ and $Q_3$, ie. to two other calibration values) within this range; and set the calculated value of the parameter P as

$$P = \frac{P_1 \text{ x } 1/Q_1}{1/Q_1+1/Q_2+1/Q_3} + \frac{P_2 \text{ x } 1/Q_2}{1/Q_1+1/Q_2+1/Q_3} + \frac{P_3 \text{ x } 1/Q_3}{1/Q_1+1/Q_2+1/Q_3}$$

where $P_1$, $P_2$ and $P_3$ are the values for the parameter at the points for the calibration values $Q_1$, $Q_2$, $Q_3$ from the calculated point.
Preferably only two Q values are used in this equation and the quality value referred to above is $Q_1$.
In more detail, the interpolation for each field (ie. assay) may be effected using the following steps:

select 3 values from database (for each field)

1 : MaxQuality
2 : ScaleQuality
3 : LevelQuality

identify d0 = distance from measurement to best calibration point
identify d1 = distance from measurement to second best calibration point

1 : Set OKDist = LevelQuality/10
2 : If d0 < OKDist then use best point only
3 : maxdist = (d0+d1)*ScaleQuality
4 : maxdist = max(maxdist, LevelQuality) (make sure at least LevelQuality)
5 : maxdist = min(maxdist, MaxQuality) (make sure not bigger than MaxQuaity)
6 : Use best (set mean = best calibration point)
7 : Include calibration points that satisfy:

1: distance < maxdist
2: new mean (based on this point and used points) is closer to measurement than old mean
3: if accepted, update mean

8 : Continue 7: with next calibration point
9 : When all calibration points are processed, repeat from 7: once more

For pixel calibration, one may use a standard colour card to construct a table for RGB values. Using the same colour card the same table should be constructed for the particular scanner being used, the colour space should be divided (e.g. mapped onto a 16x16x16 cube space), and each calculated or calibration point may be assigned into one such division (cube). For more precision, corrected positions of such points within each division may be interpolated from the values of the division corners (ie. the corners of one of the $16^3$ cubes making up the colour space).

From the identification step (D) described above, each field will have been assigned a value for the parameter being assayed for as well as a quality factor. If the quality factor falls outside a preset threshold, the PC may be set to reject the assay result - otherwise the quality factor may be used as a confidence factor by the physician - ie. for example "the cell count is certainly high/probably high/may be high but another test must be done to confirm it."

The PC at this stage should prompt the operator to identify the patient from whom the samples derive if this information has not already been supplied. This could be input manually, but desirably the PC will be linked to a bar code reader, such as an Opticon ELT 1000 wedge reader, so that patient codes may be read in from sample container labels.

The data can at this stage be exported, e.g. to the patient's physician's database or a central hospital computer. A preferred export format is the American Society for Testing and Materials (ASTM) format. Desirably the PC will be set to reject export of data for which the quality factor is too high or for which no patient identifier has been entered.

### Example 3

### Best Mode

A yet further interpolation technique involves the selection of only those measured values which are likely to provide an accurate interpolation. This technique is particularly useful for objects having a plurality of fields, each sensitive to the same chemical parameter, for example pH, where each field is sensitive only within a sub-range of the total possible range of the chemical parameter. An example of such an object is the Universal Indicator pH 0-14 stick, from Merck KgaA, Germany which has four fields each of which exhibits a colour change over a sub-range of the entire 0-14 pH range to which the stick is sensitive.

Thus, according to this interpolation technique a plurality (four in the case of the Merck stick) of colour measurements, one for each field, are obtained for a single object. Each colour measurement comprises a plurality of colour components (three in the case of RGB measurements). A calibration table of previously prepared calibration measurements for known parameter values (pH for the Merck stick) has already been compiled.

For each colour measurement X, a distance $d_j$ from that measurement to each of the calibration points $C^j$ in the colour component (e.g. RGB) space is calculated. Two calibration points $C^k, C^l$ (best and second best) are selected for which this distance $d_k, d_l$ is respectively the lowest and the next lowest value. The field quality is set equal to the lowest distance value $d_k$. For each colour component (e.g. R, G and B) the absolute difference $\Delta_i$ between the component value $C^k_i, C^l_i$ for the best and second best calibration points is calculated, and the "smallest accepted difference" m is set to the largest of these values divided by an arbitrary stored parameter (normally having the value 3). From the colour components for the measured value $X_i$, those having a difference $\Delta_i$ greater than the smallest accepted difference m are chosen, and the other components are discarded. Thus, a number of dimensions of the component space are discarded because the calibration component values $C^k_i, C^l_i$ in that dimension are too close together, which suggests that there is little change in the component with the parameter to be measured.

The next step in this technique is to compute two vectors in the reduced dimensional space **A = X-C^k** amd **B = C^l-C^k**. The interpolation index t is then calculated as a ratio of dot products **t = A.B/B.B** and the interpolated assay value y = $(V^l-V^k).t + V^k$, where $V^k$ and $V^l$ are the calibration values of the assayed parameter (e.g. pH) at $C^k$ and $C^l$.

This interpolation technique prevents the assay result from being adversely affected by variations in a particular colour component which are due to noise only and not to any variation in the assayed parameter.

The above interpolation technique may be used for a single field on a substrate, in which case the colour components will generally be $X_1$ = R, $X_2$ = G, $X_3$ = B. However, when the number of fields on the substrate measuring the same chemical parameter is increased, such as in the case of the Merck pH sticks, the number of dimensions associated with each measurement X can be increased. For example, for each Merck pH stick, twelve dimensions can be used: $X_1 = R_{field\ 1}$, $X_2 = R_{field\ 2}$, $X_3 = R_{field\ 3}$, $X_4 = R_{field\ 4}$, $X_5 = G_{field\ 1}$ etc. The calibration points C will similarly be twelve-dimensional. This will significantly improve the accuracy of the measurement results. In general, the components of each measurement X are arbitrary and may represent any measurable quantity on the substrate, provided that a relationship between the components and the assay result exists.

Measurement of pH was performed on the scanner described in relation to Example 2, using Universal Indicator pH Sticks from Merck. The calibration curve was made by scanning 3 pH sticks per pH value from 4-10. The sticks were dipped at the same time in the same buffer solution. The standard solutions were calibration buffers for pH meters, from Orion Research Incorporated, Boston, MA 02129 USA, and from Merck KGaA, 64271 Darmstadt, Germany. The sticks were immersed in the solution for 10 seconds then removed. The sticks were scanned 50 seconds after they were removed from the buffer. To avoid a reflecting layer of buffer at the scanner surface, the sticks were gently dried with a clean paper towel. The data for the mean values of the colour-numbers (R,G,B) is presented at Table 1.

Table 1

| pH | Field 1 | | | Field 2 | | | Field 3 | | | Field 4 | | |
|---|---|---|---|---|---|---|---|---|---|---|---|---|
| | R1 | G1 | B1 | R2 | G2 | B2 | R3 | G3 | B3 | R4 | G4 | B4 |
| 4.0 | 233.1 | 147.9 | 17.0 | 250.6 | 135.0 | 17.0 | 235.7 | 160.6 | 17.0 | 230.9 | 168.9 | 64.6 |
| 5.0 | 243.5 | 155.0 | 17.5 | 252.2 | 139.6 | 17.0 | 211.0 | 157.9 | 17.0 | 245.2 | 199.4 | 54.2 |
| 6.0 | 227.2 | 146.6 | 17.0 | 232.5 | 129.9 | 17.0 | 153.8 | 123.0 | 17.0 | 224.1 | 191.4 | 40.5 |
| 7.0 | 236.3 | 153.5 | 17.0 | 240.8 | 132.9 | 17.0 | 128.4 | 106.4 | 39.0 | 235.8 | 200.9 | 44.5 |
| 8.0 | 230.7 | 150.2 | 17.0 | 238.7 | 132.8 | 17.0 | 108.8 | 84.1 | 53.0 | 234.4 | 198.0 | 42.5 |
| 9.0 | 205.2 | 143.2 | 17.7 | 239.3 | 127.4 | 17.0 | 83.2 | 57.5 | 72.6 | 239.0 | 200.7 | 38.5 |
| 10.0 | 198.3 | 140.4 | 26.2 | 220.4 | 106.1 | 19.1 | 68.4 | 45.3 | 98.8 | 229.5 | 196.9 | 47.0 |

Table 2

| pH | MEASURED pH | Confidence value % |
|---|---|---|
| 5.00 | 5.01 | 1.8 |
| 7.00 | 7.03 | 2.2 |
| 9.00 | 8.97 | 2.2 |

In the pH-area (4-10), field 2 gives the best colour-change, therefore this field is given the greatest importance, by the interpolation method in determining pH, (for pH 4-10). The confidence value was determined from 9 measurement of each of the pHs 5, 7 and 9. These results are shown in Table 2

## Example 4

### Scanning and processing glucose in blood

The processing of glucose is similar to the processing of urine sticks described in Example 2, except that there is only one field on each stick and the interpolation method of Example 3 is used.

An analysis of glucose on Glucotouch sticks from Lifescan, USA was performed on the scanner and compared to the Glucotouch meter and to the HemoCue B-glucose analysis method of HemoCue AB, Sweden. The results shown in Table 3 were determined from scanning 6 sticks of each concentration. 10 μL of blood with or without added glucose was applied to the 6 strips with a multi-micropipette, and scanned within 60 seconds. The calibration curve was drawn scanning 3 sticks, from 0-25 mmol/L glucose.

Table 3

| HEMOCUE | GLUCOMETER | SCANNER/GLUCO |
|---|---|---|
| Concentration mmol/L | Concentration mmol/L | Concentration mmol/L |
| 5.6 | 5.7 | 5.4 |
| 9.7 | 10.1 | 10.0 |
| 11.6 | 11.9 | 11.9 |
| 14.6 | 14.9 | 14.5 |

Examples of the types of commercially available test strips (substrates) which may be read using the method of the invention include:

| Test substrates | Sample |
|---|---|
| Reagent strips for urinary analysis (for detection of pH, specific gravity, glucose, protein, blood, leukocytes, ketone, nitrite, urobilinogen and bilirubin) | urine |
| Blood in faeces | faeces |
| Immunological CRP (C-Reactive Protein) test | blood |
| Immunological R.A (Rheumatoid Arthritis) test | blood |
| Immunological test for pregnancy, HCG (Human Choriongonadotropin Hormone) test | blood |
| Immunological test for microalbuminuria | urine |
| Immunological test for blood from intestine, lower part | faeces |
| Immunological test for bacterial antigens (streptococcus) | spit |
| Immunological test for viral antigens (mononucleosis) | spit |
| Dry chemical analysis (reflectometric or photometric reading): | |
| Glucose in blood | blood |
| Analysis of: cholesterol, triglycerides, potassium, creatinin in urine, uric acid, GGT (gamma glutamyl transferase), ASAT (aspartate amino transferase), ALAT (alanine amino transferase), CK (creatinin kinase), bilirubin, amylase, LDH (Lactate dehydrogenase) | blood/urine |
| HbAlc - glycosylated haemoglobin for determination of longterm blood glucose level | blood |

Determination of Heliobacter Pylori-infection gi tract contents

Examples of strips which can be used with the invention are:

| Glucose strips | |
| --- | --- |
| **Strip** | **Manufacturer** |
| Glucostix | Bayer Diagnostic, Germany |
| ACCUTREND_GLUCOSE | Boehringer Mannheim, Germany |
| GLUCOTEST_1_44R | Boehringer Mannheim, Germany |
| Omnican | B. Braun Melsungen AG, Germany |
| GlucoTouch | Lifescan, USA |

| Urine strips | |
| --- | --- |
| **Strip** | **Manufacturer** |
| Nephur Test+Leuco | Boehringer Mannheim, Germany |
| Combur | Boehringer Mannheim, Germany |
| Ecur | Boehringer Mannheim, Germany |
| Multistix 10SG | Bayer Diagnostics, Germany |
| Multistix 7 | Bayer Diagnostics, Germany |
| Labstix | Bayer Diagnostics, Germany |

| pH Strips | |
| --- | --- |
| **Strip** | **Manufacturer** |
| Universalindicator pH 0-14 | Merck KGaA, Germany |

Desirably, especially where more than one of a particular type of substrate (test strip) is being scanned in a session or at a time, an unused substrate from the same batch, or an unused substrate from the same batch contacted with pure water or with a calibrated sample, is also scanned and if the parameter values differ by more than a predetermined quality value from the expected parameter values the operator may be advised to repeat the assay using a fresh batch of substrates.

Although the present invention has been described in terms of a diagnostic system and method of applicability to the field of medical testing, it will be appreciated that the invention is of applicability in any field where a quantified result is required by analysis of the colour composition of a test result on a substrate.

Furthermore, the invention has been described with particular reference to a personal computer. As will be understood from the foregoing, any general-purpose computer may be employed for the purposes of the invention and this is intended to be encompassed within the scope of the appended claims.

**Claims**

1. A method of analysis of image data from a chemical diagnostic assay which assay generates an image result on a substrate (107), said method comprising the steps of:

   i) obtaining a said image result on a substrate (107); and

   ii) imaging the image result with an image acquisition device (101) to generate digital colour image data corresponding to the colour composition and distribution of the image result; and

   iii) using data processing means (103), applying to the digital colour image data a stored relationship between the colour composition of the image result and assay calibration data to generate a quantified result for said assay,

   **characterised in that** said assay calibration data comprises a set of calibration values for combinations of at least two selected colour parameters; and

   said quantified result is generated by interpolation between at least two of said calibration values.

**2.** A diagnostic method as claimed in claim 1, wherein the image acquisition device is a desk-top, flat bed optical colour scanner (101).

**3.** A diagnostic method as claimed in claim 1, wherein the image acquisition device is a digital camera.

**4.** A diagnostic method as claimed in any preceding claim wherein said data processing means is a personal or network computer (103).

**5.** A method as claimed in any preceding claim wherein said assay calibration data comprise a set of calibration values for colours described by a three component colour coordinate system.

**6.** A method as claimed in any preceding claim, further comprising the steps of:

- identifying the location of an assay substrate (107) in said colour image data;
- classifying said assay substrate; and
- identifying digital colour data corresponding to the image result by reference to stored data relating to the classified substrate.

**7.** A method as claimed in claim 6, wherein the assay substrate (107) is classified by identifying geometric parameters of the substrate and comparing the identified geometric parameters to stored geometric parameters for known substrates.

**8.** A method as claimed in claim 6 or 7, further comprising identifying a calibration region (8) in said colour image data and comparing digital colour data from said calibration region (8) to stored digital calibration colour data whereby to derive data for the calibration of the digital colour data corresponding to the image result.

**9.** A method as claimed in any of claims 6 to 8, wherein a plurality of substrates each comprising at least one image result are identified in said colour image data; and a respective assay result is derived for each image result.

**10.** A method as claimed in any of claims 6 to 9 wherein the image result is associated with a machine-readable identifier (10) which is recorded in the colour image data and which identifies at least patient details for the assay.

**11.** A method as claimed in any of claims 6 to 10, wherein the method comprises identifying a calibration region (8) in said colour image data and generating said quantified result by reference to colour image data corresponding to said calibration region and colour image data corresponding to said image result.

**12.** Diagnostic apparatus comprising:

an image acquisition device arranged to generate digital colour image data corresponding to the colour composition and distribution of an image result of a chemical diagnostic assay; and
a data processing means arranged to receive said digital colour image data and to perform a colour analysis of said digital colour image data of said chemical diagnostic assay in accordance with the method of any of claims 1 to 11.

**13.** Apparatus as claimed in claim 12, wherein the data processing means is arranged to enter the assay result into an appropriate patient file.

**14.** Computer software which programs a data processing means to operate according to the method of any of claims 1 to 11.

**Patentansprüche**

**1.** Verfahren zur Analyse von Bilddaten von einer chemischen Diagnoseprüfung, wobei die Prüfung ein Bildergebnis auf einem Substrat (107) erzeugt, wobei das Verfahren folgende Schritte umfaßt:

i) Erhalten eines besagten Bildergebnisses auf einem Substrat (107), und

ii) Abbilden des Bildergebnisses mit einer Bilderfassungsvorrichtung (101), um digitale Farbbilddaten entsprechend der Farbzusammensetzung und Verteilung des Bildergebnisses zu erzeugen, und

iii) Verwenden von Datenverarbeitungsmitteln (103), Anwenden eines gespeicherten Verhältnisses zwischen der Farbzusammensetzung des Bildergebnisses und Prüfkalibrierdaten auf die digitalen Farbbilddaten, um ein quantifiziertes Ergebnis für die Prüfung zu erzeugen,

**dadurch gekennzeichnet, daß** die Prüfkalibrierdaten einen Satz von Kalibrierwerten für Kombinationen von zumindest zwei ausgewählten Farbparametern umfassen, und
das quantifizierte Ergebnis durch Interpolation zwischen zumindest zwei der Kalibrierwerte erzeugt wird.

2. Diagnoseverfahren nach Anspruch 1, bei dem die Bilderfassungsvorrichtung ein optischer Tischmodell-Flachbettfarbscanner (101) ist.

3. Diagnoseverfahren nach Anspruch 1, bei dem die Bilderfassungsvorrichtung eine Digitalkamera ist.

4. Diagnoseverfahren nach einem der vorstehenden Ansprüche, bei dem das Datenverarbeitungsmittel ein Personaloder Netzwerkcomputer (103) ist.

5. Verfahren nach einem der vorstehenden Ansprüche, bei dem die Prüfkalibrierdaten eine Reihe von Kalibrierwerten für Farben umfassen, die durch ein Dreikomponenten-Farbkoordinatensystem beschrieben sind.

6. Verfahren nach einem der vorstehenden Ansprüche, das weiterhin folgende Schritte umfaßt:

   - Identifizieren des Orts eines Prüfsubstrats (107) in den Farbbilddaten,

   - Klassifizieren des Prüfsubstrats, und

   - Identifizieren von digitalen Farbdaten entsprechend dem Bildergebnis unter Bezugnahme auf gespeicherte Daten, die das klassifizierte Substrat betreffen.

7. Verfahren nach Anspruch 6, bei dem das Prüfsubstrat (107) durch Identifizieren von geometrischen Parametern des Substrats und durch Vergleichen der identifizierten geometrischen Parametern mit gespeicherten geometrischen Parametern für bekannte Substrate klassifiziert wird.

8. Verfahren nach Anspruch 6 oder 7, das weiterhin den Schritt des Identifizierens eines Kalibrierbereichs (8) in den Farbbilddaten und den Schritt des Vergleichens digitaler Farbdaten von dem Kalibrierbereich (8) mit gespeicherten digitalen Kalibrierfarbdaten umfaßt, um dadurch Daten für die Kalibrierung der digitalen Farbdaten entsprechend dem Bildergebnis abzuleiten.

9. Verfahren nach einem der Ansprüche 6 bis 8, bei dem eine Mehrzahl von Substraten, die jeweils zumindest ein Bildergebnis umfassen, in den Farbbilddaten identifiziert sind, und bei dem ein entsprechendes Prüfergebnis für jedes Bildergebnis abgeleitet wird.

10. Verfahren nach einem der Ansprüche 6 bis 9, bei dem das Bildergebnis mit einem maschinenlesbaren Identifizierer (10) verbunden ist, der in den Farbbilddaten aufgezeichnet ist und der zumindest Patientendetails für die Prüfung identifiziert.

11. Verfahren nach einem der Ansprüche 6 bis 10, bei dem das Verfahren die Schritte des Identifizierens eines Kalibrierbereichs (8) in den Farbbilddaten und des Erzeugens des quantifizierten Ergebnisses durch Bezugnahme auf Farbbilddaten, die dem Kalibrierbereich entsprechen und auf Farbbilddaten, die dem Bildergebnis entsprechen, umfaßt.

12. Diagnosevorrichtung mit:

   einer Bilderfassungsvorrichtung, die angeordnet ist, um digitale Farbbilddaten entsprechend der Farbzusammensetzung und Verteilung eines Bildergebnisses einer chemischen Diagnoseprüfung zu erzeugen, und

einem Datenverarbeitungsmittel, das angeordnet ist, um die digitalen Farbbilddaten zu empfangen und eine Farbanalyse der digitalen Farbbilddaten der chemischen Diagnoseprüfung gemäß dem Verfahren nach einem der Ansprüche 1 bis 11 durchzuführen.

**13.** Vorrichtung nach Anspruch 12, bei dem das Datenverarbeitungsmittel angeordnet ist, um das Prüfergebnis in eine geeignete Patientendatei einzugeben.

**14.** Computerprogramm, das ein Datenverarbeitungsmittel programmiert, damit dieses gemäß dem Verfahren nach einem der Ansprüche 1 bis 11 arbeitet.

**Revendications**

**1.** Procédé pour analyser des données d'image provenant d'un dosage de diagnostic chimique, lequel dosage génère un résultat d'image sur un substrat (107), ledit procédé comportant les étapes consistant à :

i) obtenir ledit résultat d'image sur un substrat (107), et
ii) acquérir l'image du résultat d'image à l'aide d'un dispositif d'acquisition d'image (101) pour générer des données d'image couleur numériques correspondant à la composition et distribution couleur du résultat d'image, et
iii) utiliser des moyens de traitement de données (103), appliquer aux données d'image couleur numériques une relation mémorisée entre la composition couleur du résultat d'image et des données d'étalonnage de dosage afin de générer un résultat quantifié pour ledit dosage,

**caractérisé en ce que** lesdites données d'étalonnage de dosage comportent un ensemble de valeurs d'étalonnage pour des combinaisons d'au moins deux paramètres couleur sélectionnés, et
ledit résultat quantifié est généré par une interpolation entre au moins deux desdites valeurs d'étalonnage.

**2.** Procédé de diagnostic selon la revendication 1, dans lequel le dispositif d'acquisition d'image est un scanner optique couleur à plat de bureau (101),

**3.** Procédé de diagnostic selon la revendication 1, dans lequel le dispositif d'acquisition d'image est une caméra numérique.

**4.** Procédé de diagnostic selon l'une quelconque des revendications précédentes, dans lequel lesdits moyens de traitement de données sont un ordinateur individuel ou réseau (103).

**5.** Procédé selon l'une quelconque des revendications précédentes, dans lequel lesdites données d'étalonnage de dosage comportent un ensemble de valeurs d'étalonnage pour des couleurs décrites par un système de coordonnées couleur à trois composantes.

**6.** Procédé selon l'une quelconque des revendications précédentes, comportant en outre les étapes consistant à :

- identifier l'emplacement d'un substrat de dosage (107) dans lesdites données d'image couleur,
- classer ledit substrat de dosage, et
- identifier des données couleur numériques correspondant au résultat d'image en faisant référence à des données mémorisées se rapportant au substrat classé.

**7.** Procédé selon la revendication 6, dans lequel le substrat de dosage (107) est classé en identifiant des paramètres géométriques du substrat et en comparant les paramètres géométriques identifiés à des paramètres géométriques mémorisés pour des substrats connus.

**8.** Procédé selon la revendication 6 ou 7, comportant en outre l'identification d'une région d'étalonnage (8) dans lesdites données d'image couleur et la comparaison de données couleur numériques de ladite région d'étalonnage (8) à des données couleur d'étalonnage numériques mémorisées, pour dériver ainsi des données pour l'étalonnage des données couleur numériques correspondant au résultat d'image.

**9.** Procédé selon l'une quelconque des revendications 6 à 8, dans lequel une pluralité de substrats comportant chacun au moins un résultat d'image sont identifiés dans lesdites données d'image couleur, et un résultat de dosage respectif est dérivé pour chaque résultat d'image.

10. Procédé selon l'une quelconque des revendications 6 à 9, dans lequel le résultat d'image est associé à un identificateur lisible par machine (10) qui est enregistré dans les données d'image couleur et qui identifie au moins des détails dans le dosage concernant le patient.

11. Procédé selon l'une quelconque des revendications 6 à 10, dans lequel le procédé comporte l'identification d'une région d'étalonnage (8) dans lesdites données d'image couleur et la génération dudit résultat quantifié en faisant référence à des données d'image couleur correspondant à ladite région d'étalonnage et auxdites données d'image couleur correspondant audit résultat d'image.

12. Dispositif de diagnostic comportant :

   un dispositif d'acquisition d'image conçu pour générer des données d'image couleur numériques correspondant à la composition et distribution couleur d'un résultat d'image d'un dosage de diagnostic chimique, et des moyens de traitement de données conçus pour recevoir lesdites données d'image couleur numériques et pour effectuer une analyse couleur desdites données d'image couleur numériques dudit dosage de diagnostic chimique conformément au procédé selon l'une quelconque des revendications 1 à 11.

13. Dispositif selon la revendication 12, dans lequel les moyens de traitement de données sont conçus pour entrer le résultat du dosage dans un fichier de patient approprié.

14. Logiciel informatique qui programme des moyens de traitement de données pour qu'ils fonctionnent conformément au procédé selon l'une quelconque des revendications 1 à 11.

FIG. 1

FIG. 2

EP 0 953 149 B1

FIG. 3